# EUROPEAN PATENT APPLICATION

(11) **EP 0 660 622 A2**
(43) Date of publication of application: **28.06.1995**
(21) Application number: 94308319.6
(22) Date of filing: 10.11.1994
(51) Int. Cl.: H04Q 3/00

(54) **Switching of balanced line-pairs in a cable management system with reduced number of crosspoint switches**

(30) Priority: 23.12.1993 US 173433
(71) Applicant: THE WHITAKER CORPORATION, Wilmington, Delaware 19808 (US)
(72) Inventor: Wise, James Henry, Palmyra, Pennsylvania 17078 (US)
(74) Representative: Warren, Keith Stanley

(57) **Abstract**

A cable management system provides routing of wired services between service lines (16) and user lines (18). Each service line (16) enters the cable system at a service termination unit circuit card (22) which also holds a portion of a crosspoint switch matrix (228). Each user line (18) enters the system at a line termination unit circuit card (20). The service termination unit circuit cards (22) are all mounted to connectors on a first side of a centerplane board (24) and the line termination unit circuit cards (20) are mounted to connectors on the other side of the centerplane board (24). Pins extending through the centerplane board (24) interconnect the connectors on the opposed sides of the centerplane board (24) so that any service line (16) can be connected to any user line (18). A system controller card (26) mounted to the centerplane board (24) communicates with the circuit cards via a bus on the centerplane board (24). When the service lines and user lines (16,18) are made up of balanced line-pairs (218, 224, 222, 226), in order to reduce the number of crosspoint switches (238) in the crosspoint switch matrix (228), the differential signals on the balanced line-pairs (218, 226) are converted to single-ended signals on individual lines (240). The individual lines (240) are switched through the matrix (228) and the signals thereon are then reconverted back to differential signals on balanced line-pairs (222, 224).

## Description

This invention relates to a cable management system which provides routing of telephony, low and high speed data, power and video, between service lines and user lines through a crosspoint switching matrix under computer control and, more particularly, to an arrangement for reducing the number of crosspoint switches required to switch balanced line-pairs in such a system.

When wiring a commercial building, it is conventional that all of the services carried by wire, such as telephony, low and high speed data, power and video, enter the building for termination at respective patch panels. The patch panels are typically located within wiring closets and include a first array of terminations for the service lines which enter the building and a second array of terminations for the user lines which extend within the building to various user stations. Within each patch panel, the connections between the service lines and the user lines are made manually via jumper wires extending between the first array of terminations and the second array of terminations. In an ideal situation, records would be maintained as to where each wire goes within the building and to what it is connected. However, since the real world is not ideal, such records are not always properly maintained. In addition, wires are often tagged at the patch panels and the tags are lost or become outdated because of lack of updating. Therefore, when a technician is given a service order to add, move or change a connection, the technician must first determine exactly which physical wires are involved. This has proven to be a very time consuming and labor intensive chore. It has been proposed to provide a cable management system with automatic record keeping capability.

The proposed cable management system is interposed between a plurality of service lines and a plurality of user lines. Controllable switches are coupled between the terminations to the user lines and the service lines for selectively providing physical electrical connections between selected ones of the service lines and selected ones of she user lines. A controller is provided to control the switching means to selectively make and open connections between the service lines and the user lines in accordance with received commands, the controller having a memory in which is stored a map of the connections made through the switch. A management station is provided for issuing commands to the controller, the commands including a connect command to make a physical electrical connection through the switching means between a specified service line and a specified user line, and a disconnect command to open a physical electrical connection through the switching means between one or more specified service lines and one or more specified user lines.

In an embodiment of this cable management system, there is a centerplane board which has a first plurality of card edge connectors on a first side arranged in a first parallel array and a second plurality of card edge connectors on the other side arranged in a second parallel array orthogonal to the first parallel array. The first and second pluralities of card edge connectors are electrically interconnected through the centerplane board. The switch is mounted on the service termination unit circuit cards and these cards are installed in the card edge connectors on the first side of the centerplane board. The line termination unit circuit cards are installed in the card edge connectors on the other side of the centerplane board. Accordingly, any one or more of the plurality of service lines can be connected to any one or more of the plurality of user lines through the switch. The controller is mounted on a circuit card and installed in one of the card edge connectors on the first side of the centerplane board. A plurality of conductive bus lines are disposed on the centerplane board and are electrically interconnected to all the card edge connectors on both sides of the centerplane board. A respective transceiver coupled to the bus lines is provided on each of the controller circuit card, the service termination unit circuit cards and the line termination unit circuit cards for effecting communications therebetween over the bus lines.

One of the types of services to be switched by the system is Ethernet, which is carried in the form of differential signals over balanced line-pairs, typically twisted pairs. For each Ethernet circuit there is a first line-pair carrying signals in a first direction and a second line-pair carrying signals in a second direction. Thus, each Ethernet circuit includes four wires (i.e., two balanced line-pairs). Conventional matrix switching of a four wire circuit requires a 4x4 crosspoint of switches (i.e., 16 switches per crosspoint). Crosspoint switches take up a significant amount of space on a circuit card and contribute a considerable cost to the cable management system. Therefore, reducing the number of crosspoint switches in such a system provides an economic advantage. Recognizing that pairs of wires are connected to pairs of wires in Ethernet circuits can reduce the number of switches in such a crosspoint to four. It is an object of the present invention to further reduce the number of switches necessary to switch each circuit comprising a pair of balanced line-pairs to two switches per crosspoint.

An advantage of the invention is achieved by converting the differential signal on each of the balanced line-pairs to a signal on an individual line before entering a switching matrix and then switching the individual lines within the matrix. The signals on the switched individual lines are then converted back to differential signals on balanced line-pairs after exiting the switching matrix. Thus, a single switch suffices for each balanced line-pair crosspoint and only two switches are necessary for each four-wire Ethernet circuit.

Embodiments of the present invention will now be described by way of example with reference to the accompanying drawings, in which:
FIGURE 1 is a conceptual drawing showing the proposed cable management system discussed above;
FIGURE 2 is a block diagram of the cable management system of FIG. 1;
FIGURE 3A schematically depicts the rear of the interior or the cable management system enclosure showing the service termination unit circuit cards and the controller circuit cards;
FIGURE 3B schematically depicts the front of the interior of the cable management system enclosure showing the line termination unit circuit cards;
FIGURE 3C shows a first side of the centerplane board, which side is adapted to mount the service termination unit circuit cards and the controller circuit cards;
FIGURE 3D shows the other side of the centerplane board, which side is adapted to mount the line termination unit circuit cards;
FIGURE 3E schematically illustrates orthogonal edge connections of a service termination unit circuit card and a line termination unit circuit card to the centerplane board;
FIGURE 4 is a block diagram of an illustrative controller for the cable management system of FIG 2;
FIGURE 5 is a block diagram showing the circuitry on an illustrative line termination unit circuit card for the cable management system of FIG. 2;
FIGURE 6 is a block diagram showing the circuitry on an illustrative service termination unit circuit card for the cable management system of FIG. 2;
FIGURE 7 illustrates conventional crosspoint matrix switching of four-wire circuits each comprising two balanced line-pairs and in which sixteen switches are used per crosspoint so that any wire coming into the matrix can be connected to any wire leaving the matrix;
FIGURE 8 illustrates crosspoint matrix switching of four-wire circuits each comprising two balanced line-pairs wherein it is recognized that pairs are connected to pairs so that only four switches per crosspoint are required;
FIGURE 9 illustrates crosspoint matrix switching of four-wire circuits each comprising two balanced line-pairs according to a first embodiment of this invention wherein only two switches per crosspoint are required; and
FIGURE 10 illustrates crosspoint matrix switching of four-wire circuits each comprising two balanced line-pairs according to a second embodiment of this invention wherein only two switches per crosspoint are required.

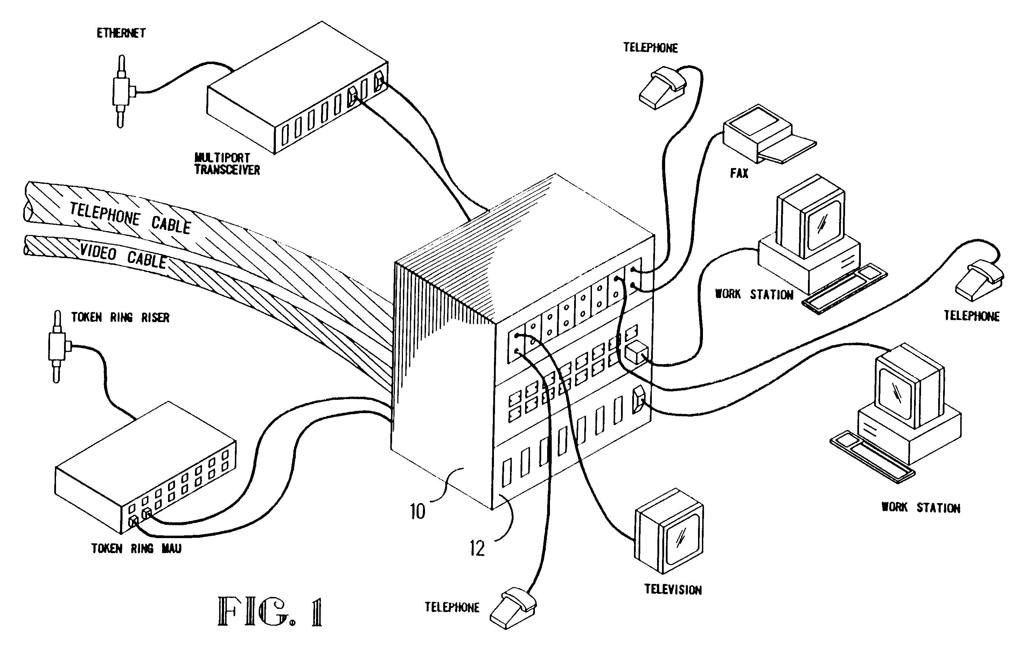

As shown in FIG. 1, the cable management system with which the present invention is concerned is contained within an enclosure 10 illustrated as having media-specific connectors on both its front surface 12 and its rear surface (not shown). The cable management system within the enclosure 10 serves as a flexible electronic patching, or cross-connecting, hub for automated cable management of communications circuits. Various services, such as LAN'S, telephone, computer I/O channels and peripherals, and video distribution links are connected to the cable management system through media-specific connectors on the rear surface of the enclosure 10. Typically, these will be aggregated multi-pair cables or high bandwidth cables, such as coax and fiber, common in riser and horizontal distribution subsystems. As shown in FIG. 1, such services include Ethernet, telephone, video and token ring.

Matrix switch modules are installed within the enclosure 10. Media-specific connectors corresponding to the media selected for each user's work station subsystem wiring are installed on the front surface 12 and have cables which are attached and then run to the user's location. Thus, as shown in FIG. 1, at the user's location there may be one or more telephones, computer work stations, facsimile machines, or television sets. Once wired in this fashion, each user can be electronically connected to any combination of services that is required. All future changes in each user's service complement can be accomplished electronically.

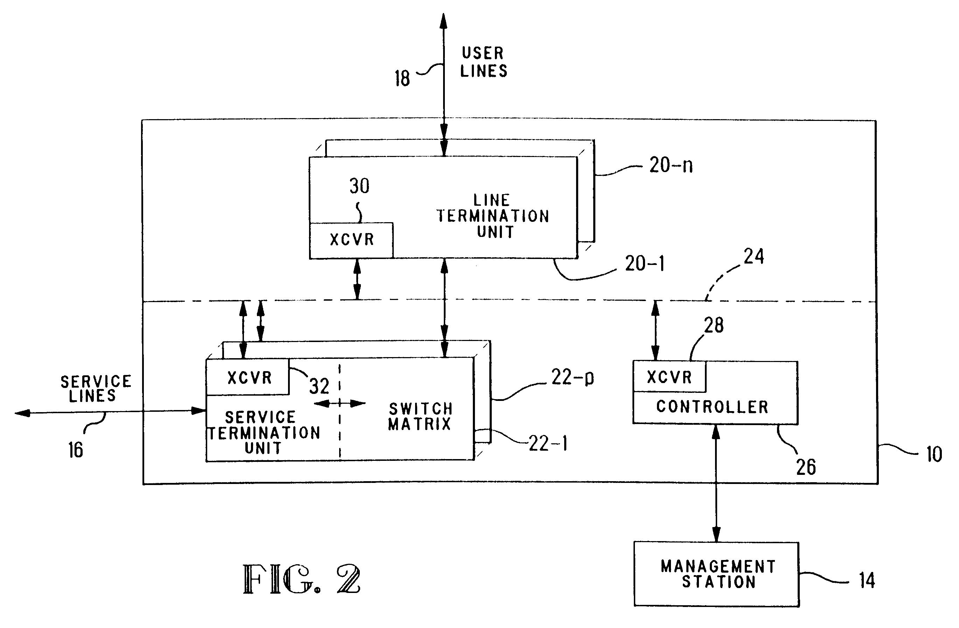

The cable management system within the enclosure 10 maintains a data base of the location, source and destination for each cable. The system is configured by a management station 14 (FIG. 2). As shown in FIG. 2, the cable management system contained within the enclosure 10 is connected to the service lines 16, which may be telephone lines, video lines, etc., which come to the system from the various service providers. The cable management system is also connected to the user lines 18 which extend to various user locations. The user lines 18 are each connected to a respective port on one of a plurality of line termination unit circuit cards 20-1,...,20-n. Similarly, the service lines 16 are each connected to a respective port on one of a plurality of service termination unit circuit cards 22-1,...,22-p.

The switching matrix for connecting the service lines 16 to the user lines 18 is distributed among the service termination unit circuit cards 22-1,...,22-p so that each of the service termination unit circuit cards 22-1,...,22-p includes thereon a plurality of service termination units for connection to a group of the service lines 16 and a portion of the overall switch matrix. The line termination unit circuit cards 20-1,...,20-n and the service termination unit circuit cards 22-1,...,22-p are installed on opposite sides of a centerplane board 24, represented schematically in FIG. 2 by a dot-dash line, in such a manner that every line termination unit circuit card 20-1,..., 20-n is connected to the switch matrix portion of every service termination unit circuit card 22-1,...,22-p, as will be described in full detail hereinafter.

Within the enclosure 10, there is also provided a controller circuit card 26 which is mounted to the centerplane board 24 on the same side thereof as the service termination unit circuit cards 22-1,...,22-p. The controller circuit card 26 is connected to the management station 14 in a suitable manner, such as through an RS-232 link or a modem. To effect communications between the controller circuit card 26, the line termination unit circuit cards 20-1,...,20-n, and the service termination unit circuit cards 22-1,...,22-p, a multi-line communications bus is provided on the centerplane board 24. Each of the controller circuit card 26, the line termination unit circuit cards 20-1,...,20-n, and the service termination unit circuit cards 22-1,...,22-p, is provided with a respective transceiver 28, 30 and 32 which is coupled to the communications bus when the respective circuit card is mounted to the centerplane board 24.

Each of the service termination unit circuit cards 22-1,..., 22-p includes a memory which contains a map of all the connections through the switch matrix portion on the respective service termination unit circuit card, and the controller circuit card 26 includes a memory which contains a map of all of the connections in the entire cable management system within the enclosure 10. The management station 14 issues commands to the circuitry on the controller circuit card 26. These commands include a connect command to make a connection between one or more specified service lines 16 and one or more specified user lines 18, and a disconnect command to open a connection between a specified one of the service lines 16 and a specified one of the user lines 18. The circuitry on the controller circuit card 26 places each appropriate command onto the communications bus on the centerplane board 24, from which it is received by the transceiver 32 on the specified one of the service termination unit circuit cards 22-1,...,22-p, which then controls its respective switch matrix portion in accordance with the received command to either make or open the specified connection.

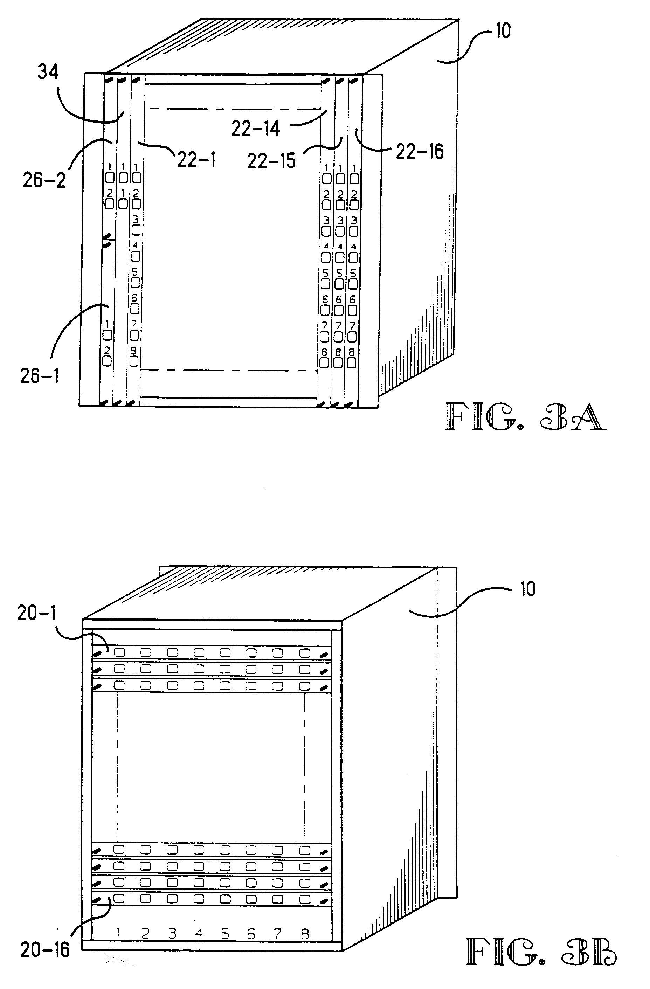

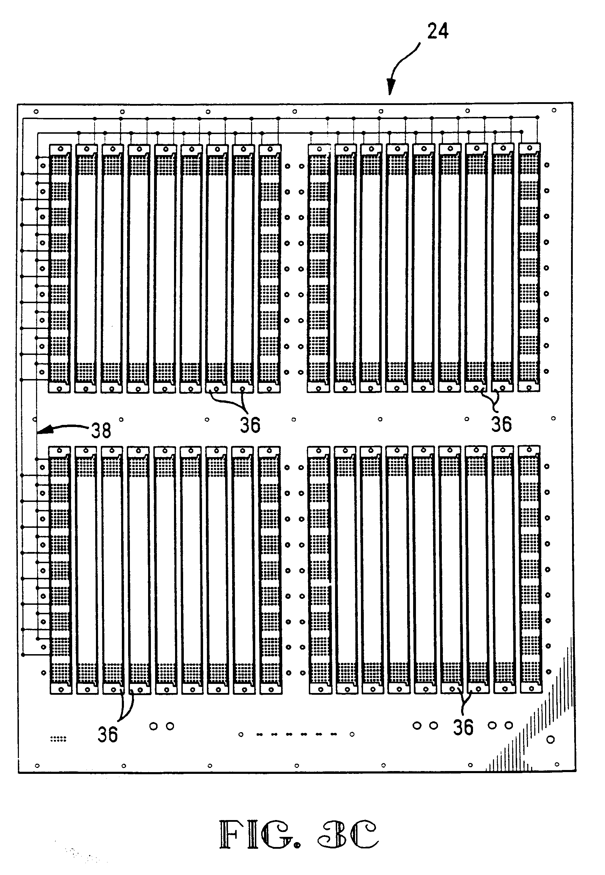

As shown in FIG. 3A, there are illustratively sixteen service termination unit circuit cards 22-1,...,22-16 which are installed vertically in the enclosure 10 from the rear thereof. In addition, the controller circuit card 26, which is comprised of two half-cards 26-1 and 26-2, is also installed vertically. As shown in FIG. 3B, there are illustratively sixteen line termination unit circuit cards 20-1,...,20-16 which are installed horizontally in the enclosure 10 from the front thereof. Each of the line termination unit circuit cards 20-1,...,20-16 and the service termination unit circuit cards 22-1,...,22-16 has eight ports terminated by a respective media-specific connector on the visible edge of the circuit card away from the centerplane board 24 for connection to a respective user or service line.

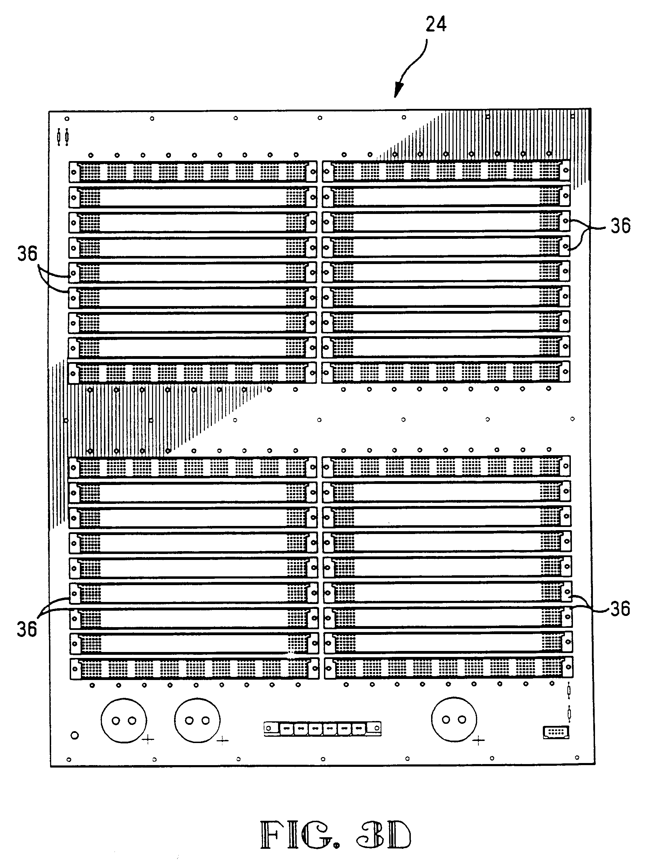

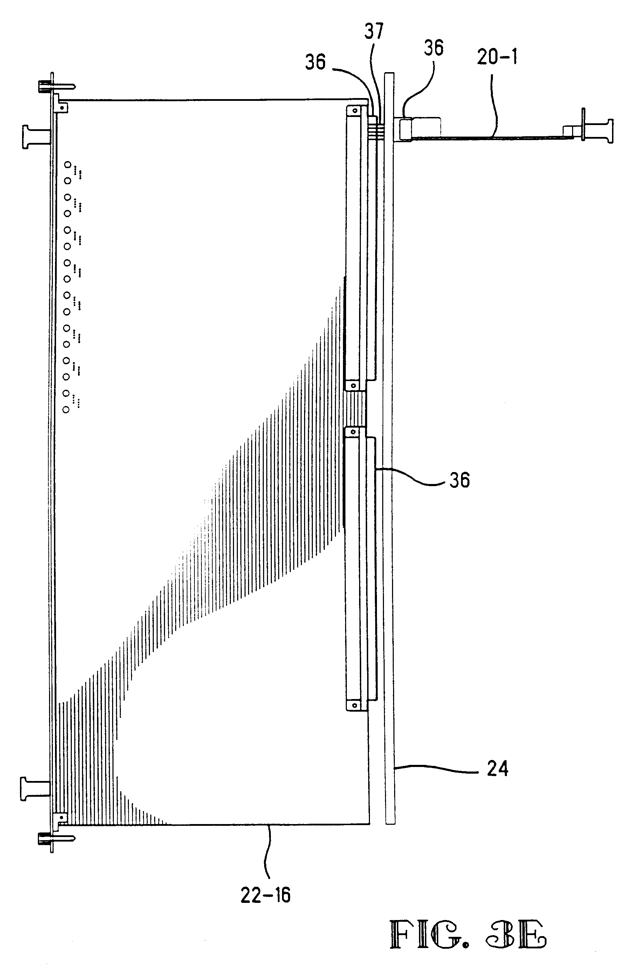

FIGS. 3C and 3D illustrate opposite sides of the centerplane board 24. Specifically, FIG. 3C shows the side of the centerplane board 24 on which the service termination unit circuit cards and the controller circuit cards are mounted and FIG. 3D shows the side of the centerplane board 24 on which the line termination unit circuit cards are mounted. Thus, as shown in FIG. 3C, for each of the service termination unit circuit cards and the controller circuit cards there is provided a pair of vertically oriented card edge connectors 36. Likewise, as shown in FIG. 3D, on the other side of the centerplane board 24 there is provided for each of the line termination unit circuit cards a pair of horizontally oriented card edge connectors 36. (The top and bottom rows of connectors 36 are not utilized.) Each of the card edge connectors 36 has within it nine fields, each of which includes thirty six pins arranged in a square 6x6 matrix. The pins extend through the centerplane board 24 to a corresponding field in one of the card edge connectors 36 on the other side of the board 24, thereby interconnecting the connectors 36 on both sides of the board 24.

Illustratively, each of the service termination unit circuit cards 22-1,...,22-16 and the line termination unit circuit cards 20-1,...,20-16 has eight input/output ports. Each of these ports is a four wire port and each of the four wires of each port of the line termination unit circuit cards is connected to each of sixteen of the pin fields in the pair of connectors 36 to which its card is connected. This accounts for 8 x 4 = 32 of the thirty-six pins of each field. The remaining four pins in each of those sixteen pin fields are reserved for power, ground and control signals. Similarly, each of the four wires of a service termination unit circuit card port is connected to the switch matrix portion on that service termination unit circuit card. The outputs of each service termination unit circuit card's switch matrix portion are eight 4-wire bundles which are each connected to four pins of each of sixteen of the pin fields of the connector 36 associated with that service termination unit circuit card. Again, that accounts for thirty-two of the thirty-six pins in each of those sixteen pin fields, with the remaining four pins being reserved for the same power, ground and control signals.

Because of the orthogonal relationship of the connectors 36 on both sides of the centerplane board 24, every port of a line termination unit circuit card is connected to a pin field connected to every one of the service termination unit circuit cards on the other side of the centerplane board 24. Thus, FIG. 3E illustrates how the line termination unit circuit card 20-1 is connected to a pin field of the service termination unit circuit card 22-16, as well as to all corresponding pin fields of all the other fifteen service termination unit circuit cards. As shown in FIG. 3E, the pins 37 (a square 6x6 array) connect the card edge connectors 36 on the two sides of the centerplane board 24 at their intersections (i.e., at their common pin fields). Illustratively, the line termination unit circuit cards 20-1,...,20-16 take up the second through the seventeenth rows of the horizontal connectors 36 on their side of the centerplane board 24. The top and bottom rows are vacant. Similarly, the service termination unit circuit cards 22-1,...,22-16 take up the third through the eighteenth columns of the vertical connectors 36 on their side of the board 24. Thus, through the switch matrices on the service termination unit circuit cards, any one of the service lines 16 can be connected to any one of the user lines 18. In the illustrative embodiment, there are sixteen service termination unit circuit cards, each with eight ports, for a total of 128 service ports and there are sixteen line termination unit circuit cards, each having eight ports, for a total of 128 user ports. Each switch matrix portion on a service termination unit circuit card is an eight port by 128 port (32 by 512 lines) matrix of crosspoints. Thus, as disclosed, each of the 128 service lines can be connected to each of the 128 user ports.

As shown schematically in FIG. 3C, there is a multi-wire communications bus 38 on the centerplane board 24. The bus 38 extends parallel to the leftmost column of the vertical connectors 36 and parallel to the upper row of the horizontal connectors 36 (not shown in FIG. 3C) on the other side of the board 24. In order that the transceivers 28, 30 and 32 may be interconnected, the bus 38 is terminated at the pin fields in the second through seventeenth rows of the leftmost column for connection to the transceivers 30 on all of the line termination unit circuit cards 20-1,...,20-16; at the upper pin fields in the third through eighteenth columns for connection to the transceivers 32 on all of the service termination unit circuit cards 22-1,...,22-16; and at the upper pin field of the first column for connection to the transceiver 28 of the controller circuit card 26.

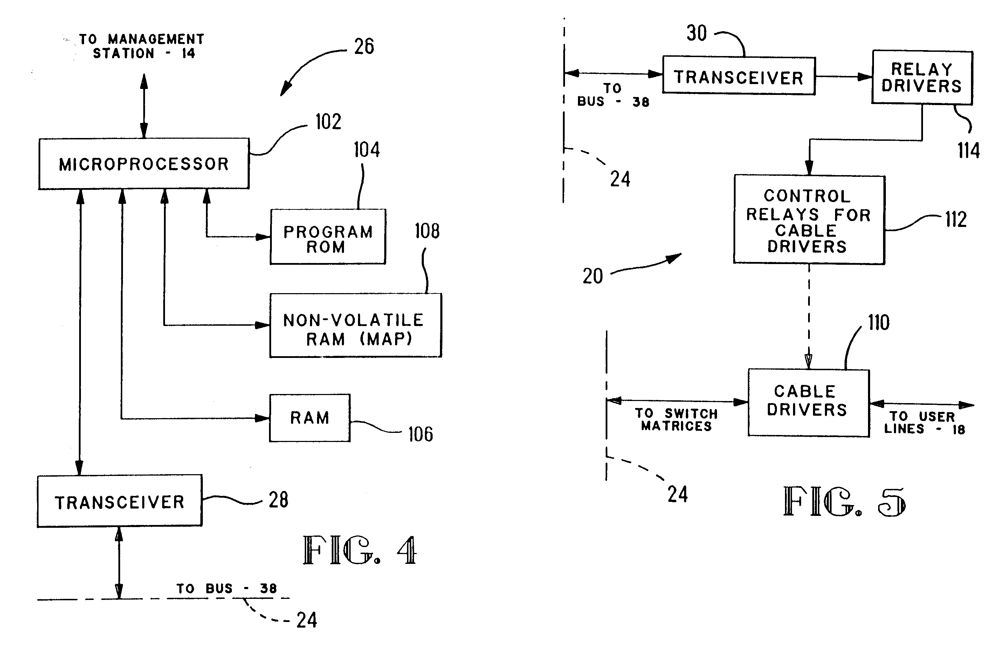

FIG. 4 illustrates circuitry on the controller circuit card 26 which may be utilized in the cable management system with which the present invention is concerned. The controller 26 includes a microprocessor 102 which is associated with three different types of memory. The first type of memory is a program read only memory (ROM) 104 which has stored therein the program instructions for operating the microprocessor 102. The microprocessor 102 is also associated with a random access memory (RAM) 106 which is utilized as a temporary storage memory by the microprocessor 102. Lastly, there is a non-volatile random access memory 108 which is utilized to store a map showing all of the connections through the switch matrix portions on the service termination unit circuit cards 22-1,...,22-16 as well as information as to what type of card is installed in each of the connectors 36. The non-volatile RAM 108 may be an electrically erasable PROM or a "flash" PROM which saves its contents even when power is lost. Since it takes a relatively long time to write information into the non-volatile RAM 108, the RAM 106 is used to temporarily store the map until such time as it is written into the non-volatile RAM 108.

The microprocessor 102 is coupled to the management station 14 in any suitable manner, such as by an RS-232 link or a modem, or through a local area network. The microprocessor 102 receives commands from the management station 14, such as a connect command or a disconnect command as described above, and in accordance with the program stored in the ROM 104 transmits instructions over the bus lines 38 on the centerplane board 24 via the transceiver 28. Illustratively, the transceiver 28 is a Neuron® chip manufactured by Echelon Corp. The microprocessor 102 addresses a specified one of the service termination unit circuit cards 22-1,...,22-16 over the bus 38 via the transceiver 28 and provides an appropriate instruction for controlling the switch matrix portion of that service termination unit circuit card. The microprocessor 102 receives acknowledgements of its instructions, which are returned over the bus 38 from the specified service termination unit circuit card, via the transceiver 28, and updates the map stored in the non-volatile RAM 108.

The line termination unit circuit card 20 illustrated in FIG. 5 includes the transceiver 30 coupled to the bus lines 38 on the centerplane board 24. Illustratively, the transceiver 30 is a Neuron® chip manufactured by Echelon Corp. The function of the line termination unit circuit card 20 is to provide interfaces between the user lines 18 and the switch matrices on the service termination unit circuit cards 22-1,...,22-16 mounted on the other side of the centerplane board 24. This interfacing takes place via user line circuit paths which include the cable drivers (amplifiers) 110. The cable drivers 110 are selectively controllable to pass signals either from individual ones of the service lines 16 to individual ones of the user lines 18 or in the reverse direction from individual ones of the user lines 18 to individual ones of the service lines 16, as determined by the settings of respective ones of the control relays 112. The control relays 112 are controlled by the relay drivers 114 which are operated on the basis of instructions received via the transceiver 30 from the microprocessor 102 of the controller 26 over the bus lines 38 on the centerplane board 24. Initially, all the cable drivers 110 are set to pass signals in the direction from the user lines 18 to the service lines 16, with the cable drivers being bypassed. This is for safety reasons so that upon system start-up dangerously high amplified signals are not inadvertently transmitted to the user lines 18, where they could damage sensitive equipment.

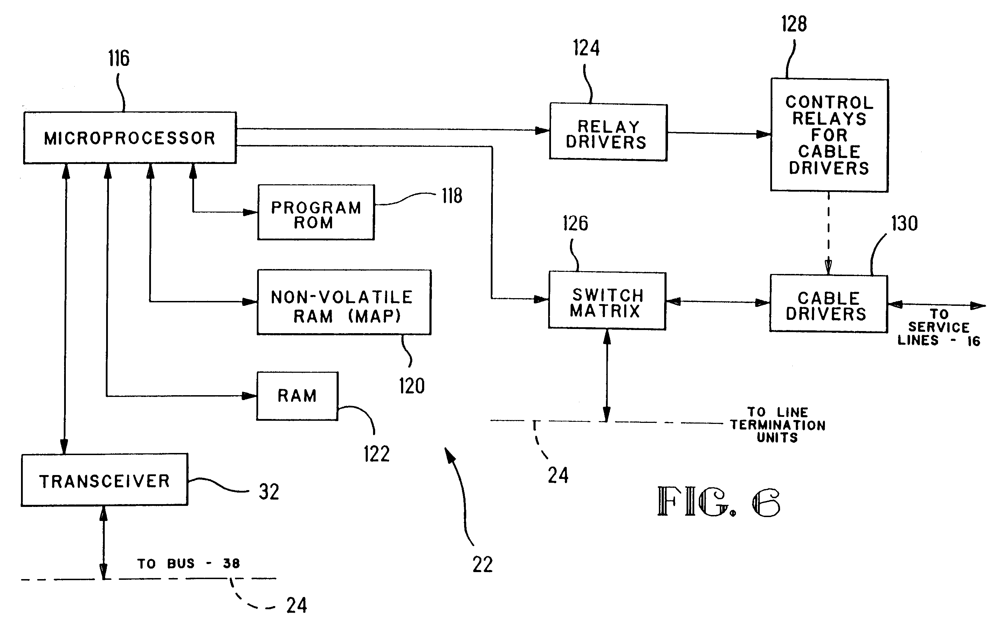

FIG. 6 illustrates the circuitry 22 on one of the service termination unit circuit cards 22-1,...,22-16. This circuitry includes a microprocessor 116 having associated therewith three types of memory. There is a program ROM 118, a non-volatile RAM 120 and a RAM 122. These memories function similarly to the memories 104, 106 and 108, respectively, associated with the microprocessor 102 of the controller 26, but are specifically for the particular one of the service termination unit circuit cards 22-1,...,22-16 with which they are associated. The microprocessor 116 is coupled to the transceiver 32, which is illustratively a Neuron® chip manufactured by Echelon Corp. The transceiver 32 is coupled to the bus lines 38 on the centerplane board 24 and is utilized for communications between the microprocessor 116 and the microprocessor 102 on the controller circuit card 26. Instructions received by the microprocessor 116 via the transceiver 32 over the bus 38 from the microprocessor 102 are utilized to control the relay drivers 124 and the switch matrix 126. The relay drivers 124 set the control relays 128 so that the cable drivers 130 interposed between the service lines 16 and the switch matrix 126 are "pointing" in the proper directions. At system start-up, for safety reasons the cable drivers 130 are initially bypassed. The switch matrix 126 is connected to all of the line termination unit circuit cards 20-1,...,20-16 mounted on the other side of the centerplane board 24, as previously described, so that any one of the service lines 16 entering that particular service termination unit circuit card may be connected to any one of the user lines 18. In accordance with instructions received from the microprocessor 102 on the controller circuit card 26, the microprocessor 116 controls the switch matrix 126 to make an appropriate physical electrical connection therethrough between a specified one of the service lines 16 entering that card and a specified one of the user lines 18 entering any one of the line termination unit circuit cards 20-1,...,20-16 on the other side of the centerplane board 24.

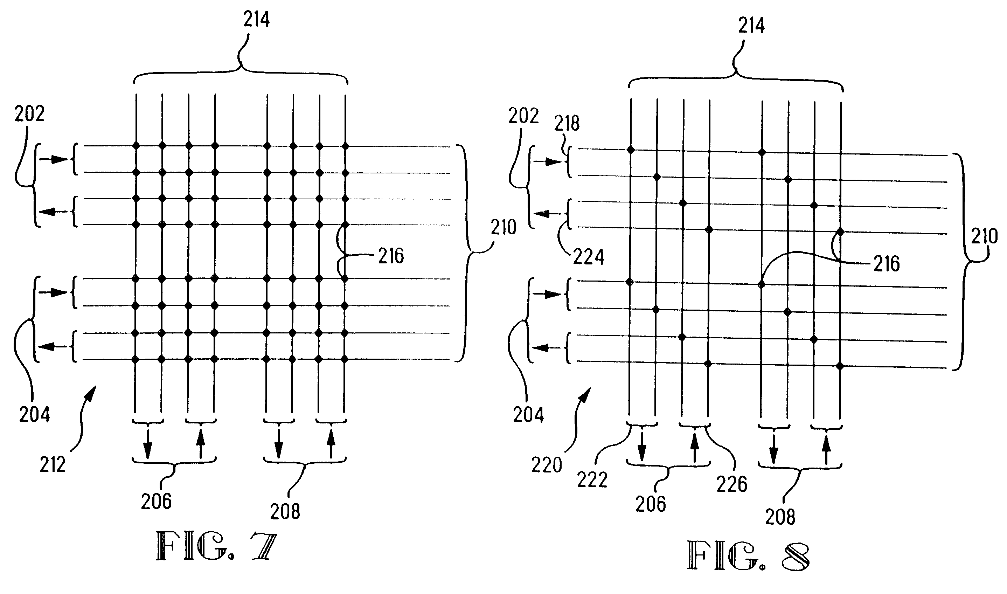

Figure 7 illustrates a conventional crosspoint matrix for providing switching between a first pair of Ethernet circuits 202, 204 and a second pair of Ethernet circuits 206, 208. Each of the Ethernet circuits 202, 204, 206, 208 comprises four wires divided into two balanced line-pairs, with each line-pair adapted for directional transmission of differential signals, as is conventional and well known. If one wanted to be able to connect any of the wires within one of the circuits 202, 204 to any of the wires within one of the circuits 206, 208, a crosspoint matrix of the type shown in Figure 7 would be utilized, wherein the circuits 202, 204 are connected to the row lines 210 of the matrix 212 and the circuits 206, 208 are connected to the column lines 214 of the matrix 212. At the intersection of each of the row lines 210 and column lines 214 is a crosspoint switch 216 designated by a circle in Figure 7.

Since each of the Ethernet circuits 202, 204, 206, 208 includes two balanced line-pairs each individually adapted for directional signal transmission, the number of crosspoint switches shown in Figure 7 may be reduced by the arrangement shown in Figure 8. Thus, if the Ethernet circuit 202 is to be connected to the Ethernet circuit 206, the balanced line-pair 218 of the circuit 202 on which signals are transmitted into the matrix 220 is to be connected to the balanced line-pair 222 of the circuit 206, on which signals are transmitted out of the matrix 220. Similarly, the balanced line-pair 224 of the circuit 202, on which signals are transmitted out of the matrix 220, is connected to the balanced line-pair 226 of the circuit 206, on which signals are transmitted into the matrix 220. Thus, since pairs of wires are connected to pairs of wires through the matrix 220, only four crosspoint switches are necessary for making the connection between the four-wire Ethernet circuit 202 and the four-wire Ethernet circuit 206, as shown in Figure 8.

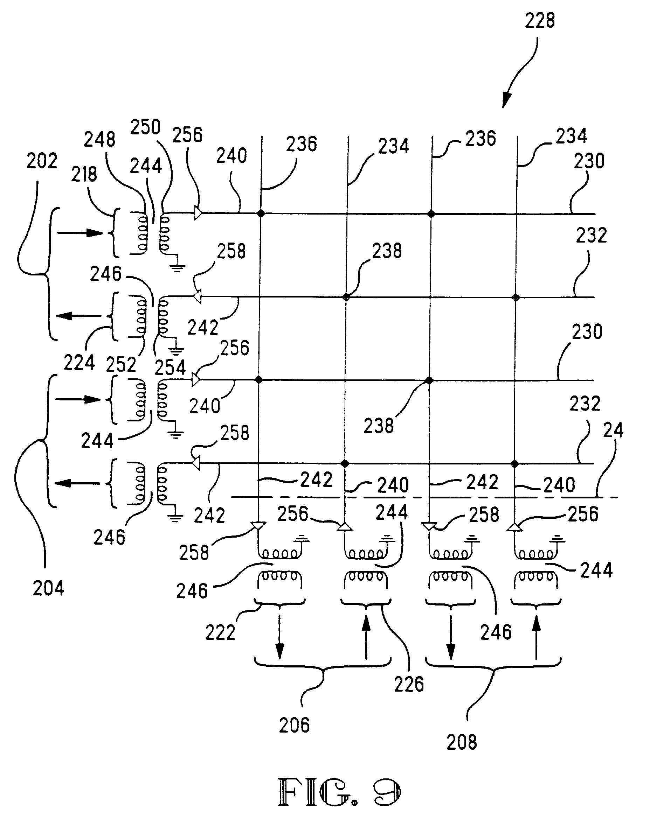

Figure 9 shows an arrangement according to a first embodiment of the present invention where the number of crosspoint switches is reduced by a factor of two from that shown in Figure 8. Thus, the switching matrix 228 has a first plurality of row lines 230, a second plurality of row lines 232, a first plurality of column lines 234, a second plurality of column lines 236, and a plurality of crosspoint switches 238. Each of the crosspoint switches 238 is at the intersection of either one of the first plurality of row lines 230 and the second plurality of column lines 236 or at the intersection of one of the second plurality of row lines 232 and the first plurality of column lines 234. As will become apparent from the following discussion, the row and column lines are separated into first and second pluralities in order to account for the directivity of signal transmission of the balanced line-pairs. According to this invention, a first plurality of individual lines 240 are each connected to a respective one of either the first plurality of row lines 230 or the first plurality of column lines 234. Similarly, a second plurality of individual lines 242 are each connected to a respective one of either the second plurality of row lines 232 or the second plurality of column lines 236. Thus, the matrix 228, which is on one of the service termination unit circuit cards 22-1...,22-16, makes connections under the control of the microprocessor 116 (Figure 6) on that service termination unit circuit card between pairs of individual lines 240 and 242.

Since each of the four-wire Ethernet circuits is made up of two balanced line-pairs, the signals on a balanced line-pair which are entering the switching matrix 228 must be converted to signals on one of the individual lines 240 and, conversely, the signals on the individual lines 242 which are leaving the switching matrix 228 must be converted to differential signals on a balanced line-pair. Accordingly, such conversion is effected by providing a first plurality of transformers 244 and a second plurality of transformers 246. The first plurality of transformers 244 converts the differential signals on the balanced line-pairs to signals on respective ones of the individual lines 240, and the second plurality of transformers 246 converts the signals on the individual lines 242 to differential signals on respective balanced line-pairs. Thus, each of the first plurality of transformers has a first winding 248 and a second winding 250. The first winding 248 is connected to a respective balanced line-pair, illustratively the line-pair 218. A first end of the second winding 250 is connected to a respective individual line 240 and the second end of the second winding 250 is connected to a reference potential, illustratively ground. Similarly, each of the second plurality of transformers 246 includes a first winding 252 and a second winding 254. The first winding 252 of the transformer 246 is connected to a respective balanced line-pair, illustratively the line-pair 224. A first end of the second winding 254 is connected to a respective one of the individual lines 242 and the other end of the second winding 254 is connected to a reference potential, illustratively ground.

Since the crosspoint switches 238 are capacitive in nature, there is provided in series with each of the individual lines 240 an amplification means 256 for driving all of the crosspoint switches 238 associated with that line 240. Similarly, for the signals leaving the crosspoint switches 238, there is provided an amplification means 258 which is serially connected in each of the individual lines 242 for driving the line-pair connected to the respective transformer 246. Preferably, the amplifiers and transformers associated with the user lines are mounted on the line termination unit circuit cards.

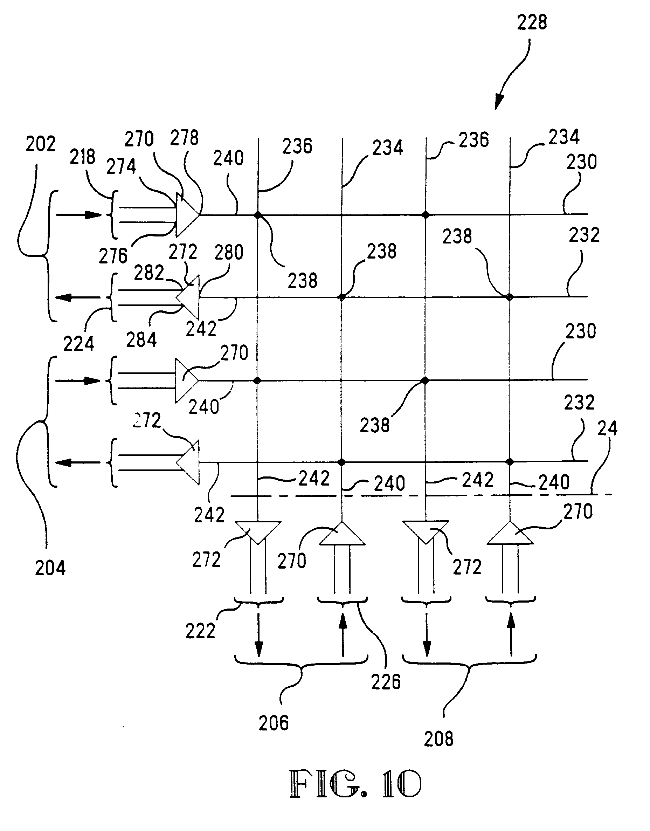

Figure 10 shows an arrangement according to a second embodiment of the present invention where, as with Figure 9, the number of crosspoint switches is reduced by a factor of two from that shown in Figure 8. The embodiment of Figure 10 differs from that of Figure 9 in that signal conversion is effected by means of differential input operational amplifiers and differential output operational amplifiers, instead of by transformers. Thus, as shown in Figure 10, there is provided a first plurality of amplifiers 270 and a second plurality of amplifiers 272. Each of the first plurality of amplifiers 270 is a differential input operational amplifier having a pair of differential inputs 274 and 276 and a single ended output 278. Each of the second plurality of amplifiers 272 has a single ended input 280 and a pair of differential outputs 282 and 284.

Each of the first plurality of amplifiers 270 has its differential inputs 274, 276 connected to a respective balanced line-pair carrying signals entering the switching matrix 228 (e.g., the balanced line-pairs 218 and 226) and has its single ended output 278 connected to a respective one of the individual lines 240. Similarly, each of the second plurality of amplifiers 272 has its differential outputs 282, 284 connected to a respective one of the balanced line-pairs carrying signals exiting the switching matrix 228 (e.g., the balanced line-pairs 224 and 222) and has its single ended input 280 connected to a respective one of the individual lines 242. Thus, differential signals entering the switching matrix 228 on balanced line-pairs are converted by the first plurality of amplifiers 270 into single ended signals on the individual lines 240. These signals are switched through the crosspoint switches 238 and exit the switching matrix 228 as single ended signals on the individual lines 242. The second plurality of amplifiers 272 convert the single ended signals on the individual lines 242 into differential signals which are placed on balanced line-pairs.

The first plurality of amplifiers 270 provide sufficient amplification for driving the crosspoint switches 238, and the second plurality of amplifiers 272 provide sufficient amplification for driving their associated balanced line-pairs. Thus, the embodiment illustrated in Figure 10 does not require the additional amplification means required by the embodiment illustrated in Figure 9. As with the embodiment shown in Figure 9, the amplifiers of the embodiment shown in Figure 10 associated with the user lines are preferably mounted on the line termination unit circuit cards.

In summary, the present invention recognizes that, when dealing with balanced line-pairs, such pairs are always connected to other such pairs. Further, the differential signal on each of the balanced line-pairs is converted to a single-ended signal on an individual line, which is then switched by a switch matrix and converted back to a differential signal on a balanced line-pair, with suitable amplifiers/drivers for driving the crosspoint switches and the line-pairs exiting the switch matrix. Thus, for each four-wire circuit which comprises two balanced line-pairs, only two crosspoint switches are required to make a connection to a similar such four-wire circuit.

Accordingly, there has been disclosed an improved cable management system for providing connections between service lines and user lines, wherein the number of crosspoint switches needed to provide four-wire Ethernet circuit switching has been reduced to a minimum. While an illustrative embodiment of the present invention has been disclosed herein, it is understood that various modifications and adaptations to the disclosed embodiment will be apparent to those of ordinary skill in the art.

## Claims

1. Apparatus in a signal communications system comprising, multiple first balanced pair signal lines for directional signal transmission, multiple second balanced pair signal lines for directional signal transmission, and a cross point switching matrix connecting the first balanced pair signal lines with a second pair of balanced signal lines, characterized in that;
the crosspoint switching matrix (228) comprises, multiple first row lines (230) intersecting each of multiple first column lines (236), multiple second row lines (232) intersecting each of multiple second column lines (234), single crosspoint switches (238) at respective intersections of the row lines (230, 232) and the column lines (236, 234), multiple individual first lines (240) connected by respective single cross point switches (238) to respective intersections, multiple individual second lines (242) connected by respective cross point switches (238) to respective intersections, converters (244, 270) on respective first lines (240) connected to respective input balanced pair signal lines (218), and converters (246, 272) on respective second lines (242) connected to respective output balanced pair signal lines (224).

2. Apparatus as recited in claim 1, further characterized by; an amplifier (256) on each of the individual first lines (240), and an amplifier (258) on each of the individual second lines (242).

3. Apparatus as recited in claim 1, further characterized by; a differential amplifier (270) on each of the individual first lines (240), and a differential amplifier (280) on each of the individual second lines (242).

4. Apparatus as recited in claim 1, further characterized by; windings (250) on transformers (244) connecting respective first lines (240) to electrical reference potential, windings (248) on the transformers (244) connected to respective input balanced pair signal lines (218), windings (254) on transformers (246) connecting respective first lines (242) to electrical reference potential, and windings (252) on the transformers (246) connected to respective output balanced pair signal lines (224).

5. Apparatus as recited in claim 1, further characterized by; transformers (244) connecting respective first lines (240) to electrical reference potential, the transformers (244) being connected to respective input balanced pair signal lines (218), and transformers (246) connecting respective first lines (242) to electrical reference potential, and the transformers (246) being connected to respective output balanced pair signal lines (224).
